# EUROPEAN PATENT SPECIFICATION

(11) **EP 4 189 019 B1**
(45) Date of publication and mention of the grant of the patent: **12.06.2024**
(21) Application number: 21755717.2
(22) Date of filing: 29.07.2021
(51) Int. Cl.: C09D 5/16, C09D 7/62, C08K 9/04

(54) **REPELLENT COATINGS AND USE THEREOF**
MULTIFUNKTIONELLE BESCHICHTUNG MIT OMNIPHOBEN UND ANTISTATISCHEN EIGENSCHAFTEN
REVÊTEMENT MULTIFONCTIONNEL PRÉSENTANT DES PROPRIÉTÉS OMNIPHOBES ET ANTISTATIQUES

(30) Priority: 30.07.2020 EP 20382700
(43) Date of publication of application: 07.06.2023
(73) Proprietor: Fundación Cidetec, 20014 Donostia-San Sebastián (ES)
(72) Inventor: FENERO BISQUER, Marta, 20014 DONOSTIA-SAN SEBASTIÁN (ES); PALENZUELA CONDE, Jesús, 20014 DONOSTIA-SAN SEBASTIÁN (ES); VIÑUALES MARTINEZ, Ana, 20014 DONOSTIA-SAN SEBASTIÁN (ES); CABAÑERO SEVILLANO, Germán, 20014 DONOSTIA-SAN SEBASTIÁN (ES); MEDINA, Estibaliz, 48320 AJANGIZ (ES)
(74) Representative: ZBM Patents - Zea, Barlocci & Markvardsen
(86) International application number: PCT/EP2021/071277
(87) International publication number: WO 2022/023476

(56) References cited:
- WO-A1-2017/206010
- WO-A1-2019/121829

## Description

This application claims the benefit of European Patent Application 20382700.1 filed on July 30th, 2020.

### Technical Field

The present invention relates to the field of chemistry, more particularly to coating materials. In particular, the invention relates to modified static dissipative materials, particularly clays, functionalised with inorganic or organic moieties, and to a process for their preparation. It also relates to coating compositions comprising the modified static dissipative materials, particularly clays, which show omniphobic and antistatic properties, and to articles of manufacture coated with these compositions.

### Background Art

Surface contamination implies a huge negative effect on a broad range of applications, as it could lead to significant safety and health risks, detrimental impact on performance and high maintenance costs.

To solve this surface contamination problem, nowadays there are some solutions that are based in the substance to be repelled. For example, water and oil repellence is achieved by surface structuration and/or low surface energy materials, mainly fluorinated materials (F-materials) and silicones.

Another important problem that has been studied recently is the repellence of dust. To solve this problem, several approaches have been developed, such as: superhydrophobic coatings (water droplets are required to remove the solid particles from the surface), hydrophilic coatings, photocatalytic coatings, antistatic coatings (hydrophilic behaviour, conductive polymers, conductive particles), electrodynamic screens (active coatings). Laponite nanoparticles, a synthetic type of silicate nano-clay in the smectite family have also been used for inducing antistatic and dust-repellency effects thanks to their intrinsically ionic and electrical conductivity resulting from its configuration as a continuous layer.

Although there is a lot of work in the development of these types of solutions, there are only few approaches that overcome the repellence of both liquids and dust contamination.

The current solutions for simultaneously repelling liquids and dust particles related to antistatic effects are based on structured layers. This approach requires at least the fabrication of a conductive layer which is modified with a low surface energy material in a second step. These solutions involve several steps, with consequent time consuming and, furthermore, complex equipment are often required, leading to high production cost. On the other hand, superhydrophobic surfaces based solutions involve micro/nanostructured motifs which not only affect the material aesthetics, but also suffer from weak mechanical resistance since their damages result on the loss of the repellent capability of the material.

Fenero M. et al (ACS Applied Materials & Interfaces 2017) disclose transparent, antistatic, and omniphobic multifunctional laponite-based films prepared from a 7:3 mixture of unmodified laponites and modified laponites with a degree of functionalisation of 60%, which is equivalent to a global laponite functionalisation of about 18%. The modified laponites were obtained by adding a mono-silylated fluorinated compound (1H, 1H,2H,2H-perfluorooctyltriethoxysilane) to a dispersion of Laponite XLG. As explained in the article, films processed from a 4% (w/v) ethanolic-aqueous gel only containing modified laponites (60% functionalisation) were not electrically conductive, which has a negative impact on the dust-repellent functionality. It is explained that the possible cause is the fact that the quantitative functionalisation of the laponite clays blocked the electrical charge transport and distorted the interlinked and overlapping arrangement of the laponite platelets.

Thus, taking into account the teachings in the prior art there is still a need of providing single formulations which are capable of providing liquid and dust repellence at a time while showing good mechanical resistance.

### Summary of Invention

The present inventors have developed new modified static dissipative materials, particularly clays, in particular new modified laponites, which are highly functionalised with inorganic or organic moieties. When used as coating materials for a variety of substrates, the modified static dissipative materials, not only provide omniphobic characteristics, but also present antistatic properties. This finding was totally unexpected since, according to Fenero et al, the process of functionalisation alters this continuous layer, and laponites must be configured as a continuous layer in order to obtain ionic an electrical conductivity, and thus, antistatic and dust-repellency effects.

Additionally, as illustrated in the examples below, and unlike the multifunctional laponite-based films of the prior art, the modified static dissipative materials of the present invention, particularly clays, show good adhesion to the substrates to which they are applied. As a result, the static dissipative materials of the present invention show improved mechanical properties, in particular improved abrasion resistance. Without being bound to theory it is thought that the presence of at least two reactive functional groups in the inorganic or organic moieties used to modify the static dissipative materials, particularly clays, allows the simultaneous anchoring to both, the static dissipative materials, particularly the clay nanoparticles, and the substrate surface to which the coating is applied, thus improving the adhesion and consequent mechanical performance of the coatings.

Thus, in the present invention the ability to repel fouling agents (liquids and dust particles) by two different mechanisms (omniphobicity and antistatic) is achieved by using a single composition. A further advantage of the coatings of the invention is that their fabrication can be performed by using conventional techniques such as dip-coating, bar-coating, spin-coating and the like.

Therefore, a first aspect of the invention relates to a modified static dissipative material, comprising:
a) a static dissipative material, and
b) a plurality of inorganic or organic moieties having two or more reactive functional groups, each reactive functional group being independently selected from the group consisting of a silyl group, a phosphonyl group, a biphosphonyl group, thiol, a carboxyl group, and an epoxy group,
wherein the inorganic or organic moieties are chemically bonded to the static dissipative material. In particular, the static dissipative material a) has a sheet resistance equal to or lower than 10¹² Ohm/sq as measured by the Van der Pauw method when applied to a substrate. In particular, the modified static dissipative material has a static contact angle of water from 50 to 130° as measured by the Laplace-Young fitting method when applied to a substrate. Particularly, the static dissipative material is a clay, in particular a nano-clay.

The modified static dissipative materials of the invention, particularly clays, may be used to prepare coating compositions with holistic self-cleaning properties against liquids, solids and liquid-solid mixtures. Thus, a second aspect of the invention relates to a coating composition comprising the modified static dissipative material as previously defined and one or more carriers or additives.

A third aspect of the invention relates to a process for the preparation of the modified static dissipative material, as previously defined, which comprises the following steps:
a) providing a dispersion of the unmodified static dissipative material in a solvent; and
b) adding an inorganic or organic compound having two or more reactive functional groups, each reactive functional group being independently selected from the group consisting of a silyl group, a phosphonyl group, a biphosphonyl group, thiol, a carboxyl group, and an epoxy group to form a chemical bond between the static dissipative material and the inorganic or organic compound.

A fourth aspect of the invention relates to a process for coating at least part of the surface of a substrate which comprises applying the coating composition as previously defined to at least part of the surface of a substrate.

A fifth aspect of the invention relates to an article of manufacture coated with the coating composition as previously defined.

### Brief Description of Drawings

FIG. 1a shows the chemical structure of a laponite having the empiric formula Na_{0.7}Si₈Mg_{5.5}Li_{0.3}O₂₀(OH)₄.
FIG. 1b shows a laponite disk-like particle having a diameter of about 25 nm and a thickness of about 1 nm with negative charges on the faces and positive charges on the rims.

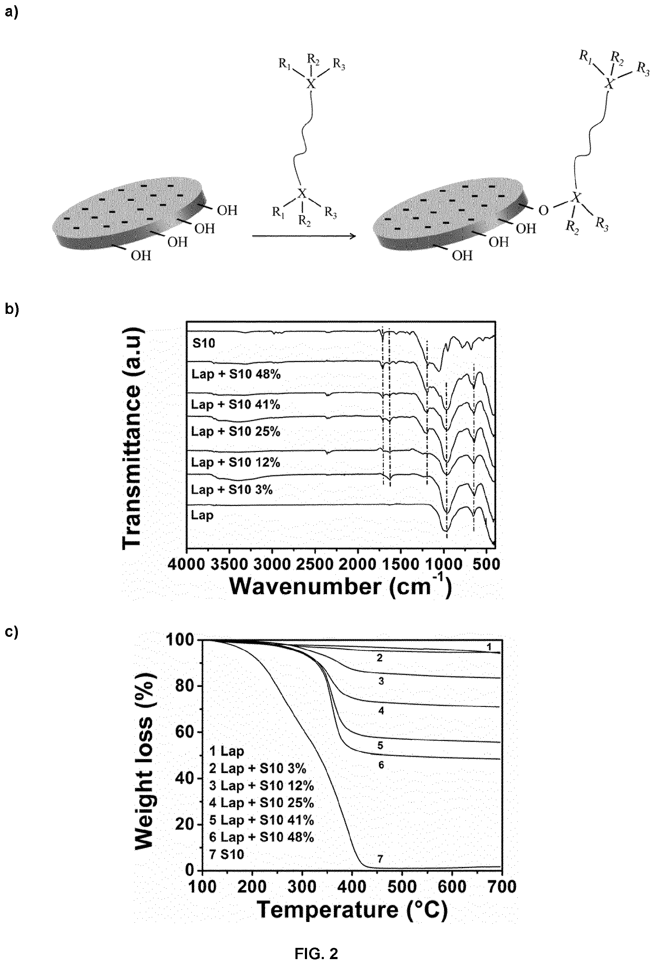

FIG. 2a shows a schematic view of an embodiment of a functionalized clay (in particular a laponite, Lap) prepared by chemically bonding a compound having two reactive functional groups (-XR₁R₂R₃) to an unmodified clay. FIG. 2b shows the ATR-FTIR spectrum of pure S10, unmodified Lap and powders of modified Lap containing different functionalization S10/Lap rates: 3 wt. %, 12 wt. %, 25 wt. %, 41 wt. % and 48 wt. %. FIG. 2c shows the thermogravimetric analysis of unmodified Lap, pure S10 and modified Lap containing different functionalization S10/Lap rates: 3 wt. %, 12 wt. %, 25 wt. %, 41 wt. % and 48 wt. %.
FIG. 3a shows the static contact angles observed for pristine glass and glass modified by coating of: Lap, S10 and the developed formulations containing S10/Lap ratios ranging from 3% to 48%.
FIG. 3b shows the total surface free energy and its dispersive (non-polar) and polar components determined using the Fowkes model for pristine glass and glass modified by coatings of: Lap, S10 and the developed formulations containing S10/Lap ratios ranging from 3 wt.% to 48 wt.%.
FIG. 4 shows sheet resistance of pristine glass, pure Lap and S10 (S) films and coatings obtained from the formulations containing different S10/Lap ratios.
FIG. 5 shows self-cleaning ability of omniphobic surface (i) and pristine glass (ii) against methylene tinted water.
FIG. 6 shows dust repellence test against carbon black powder. a) Scheme of the experiment carried out to evaluate the dust adhesion. b) Photographs of samples before dust repellence test: pristine PC (i) and PC coated by Lap (ii), S10/Lap 41 wt. % (iii) and pure S10 (iv). c) Photographs of samples after dust repellence test: pristine PC (i) and PC coated by Lap (ii), S10/Lap 41 wt. % (iii) and pure S10 (iv).
FIG. 7 shows cross-section micrographs of the coating S10/Lap 41 wt. % before (a) and after (b) performing 50 abrasion cycles.
FIG. 8 shows cross-section micrographs of the first coating (perfluorosilane + laponites) published before (a) and after (b) performing 5 abrasion cycles.

### Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

The term "about" or "around" as used herein refers to a range of values ± 10% of a specified value. For example, the expression "about 10" or "around 10" includes ± 10% of 10, i.e. from 9 to 11.

The term "clay" as used herein refers to a natural or synthetic clay and refers to particles of layered mineral silicates stacked together. They have intrinsic electrical conductivity. Clays are characterized by chemical composition and nanoparticle morphology. Clays of nanometric size are known as nano-clays and typically have dimensions ranging from 1-500 nm as measured by transmission electron microscopy (TEM). Depending on chemical composition and nanoparticle morphology, nanoclays are organized into several classes. Non-limiting examples of clays such as laponites, smectites, montmorillonites, bentonites, kaolinites, hectorites, and halloysites.

The terms "modified static dissipative material" or "functionalised static dissipative material", and "modified clay" or "functionalised clay" as used herein refer to a static dissipative material or clay that has been chemically and/or structurally altered by chemically binding of molecules, in particular inorganic or organic compounds having two or more reactive functional groups, to its surface.

As used herein, the term "moiety" refers to a portion or fragment of a compound or molecule. Thus, "inorganic or organic moiety having two or more reactive functional groups" refers to the fragment of an inorganic or organic compound having two or more reactive functional groups, which is chemically attached to the static dissipative material.

The term "omniphobic" as used herein refers to a material which is simultaneously hydrophobic and oleophobic, i.e., a material which has the ability to repel liquids, in particular both water and oils.

The term "antistatic" as used herein refers to a material which is able to dissipate, or remove a static charge, i.e., a material which shows low adhesion to solid particles such as dust particles. Antistatic materials have thus the ability to repel solids.

The term "wettability" as used herein refers to the ability of a liquid to maintain contact with a solid surface, and it is controlled by the balance between intermolecular interactions of adhesive type (liquid to surface) and cohesive type (liquid to liquid).

The term "contact angle" or "wetting angle" as used herein refers to the angle between the surface of the liquid and the outline of the contact surface. It is a measure of the wettability of a substrate by a liquid, and can be quantified by the Laplace-Young fitting method, for example as disclosed in Hoorfar, M. et al. (Advances in colloid and interface science 2006).

The term "sheet resistance" or "resistivity" as used herein refers to the resistance of thin films that are nominally uniform in thickness. It can be quantified by Van der Pauw method, for example as described in Van der Pauw L.J. (Philips Res. Rep 1958). Commonly, resistivity is in units of Ω·m (resulting from Ω·m2/m (Ω·area/length)). When divided by the sheet thickness (m), the units are the term "(m/m)" cancels, but represents a special "square" situation yielding an answer in ohms. Thus, sheet resistance is measured in ohms per square (Ω/sq or Ohm/sq). Sheet resistance may be used to assess antistatic properties.

The term "abrasion resistance" as used herein refers to the ability of a surface to resist being worn away by rubbing or friction.

The term -(C₁-Cₙ)alkyl (wherein n is e.g. 30, 15 or 6) refers to a saturated branched or linear hydrocarbon chain which contains from 1 to n (e.g. 30, 15 or 6) carbon atoms and only single bonds. Non-limiting examples of -(C₁-Cₙ)alkyl groups include methyl, ethyl, propyl, isopropyl, butyl, isobutyl, sec-butyl, tert-butyl, pentyl, or hexyl. The term -O(C₁-Cₙ)alkyl refers to an alkoxy group, wherein the alkyl part is as previously defined. Non-limiting examples of -O(C₁-Cₙ)alkyl groups include methoxy, ethoxy, propoxy, isopropoxy, butoxy, or isobutoxy.

The term -(C₃-C₁₀)cycloalkyl refers to a saturated carbocyclic ring system which may be monocyclic or bicyclic and which contains from 3 to 10 carbon atoms. Examples include cyclopropane, cyclobutane, cyclopentane, cyclohexane or cyclooctane.

A halogen substituent means fluoro, chloro, bromo or iodo.

As used herein, the term "reactive functional group" refers to a functional group which can react under appropriate conditions to form a chemical bond with an atom or group of atoms that are not part of the reactive functional group, i.e., the functional groups present in the surface of the static dissipative material. The term "hydrolysable group" as used herein refers to a reactive functional group as previously defined which can be broken down, or undergo hydrolysis in the presence of water.

The expression "two or more reactive functional groups" means that the inorganic or organic moiety can have two or more, preferably with 2, 3 or 4 reactive functional groups. For the purposes of the invention, room temperature is 20-25 °C.

### Modified static dissipative materials

As mentioned above, the invention relates to a modified static dissipative material, comprising a) a static dissipative material, and b) a plurality of inorganic or organic moieties having two or more reactive functional groups as defined herein, wherein the inorganic or organic moieties are chemically bonded to the static dissipative material. In one embodiment, optionally in combination with one or more features of the various embodiments described above or below, the modified static dissipative material consists of a) a static dissipative material, and b) a plurality of inorganic or organic moieties having two or more reactive functional groups as defined herein.

The modified static dissipative materials of the present invention, particularly clays, can be prepared by functionalising unmodified static dissipative materials with certain organic and inorganic moieties.

In one embodiment, optionally in combination with one or more features of the various embodiments described above or below, the static dissipative material a) (i.e. the unmodified material) has a sheet resistance equal to or lower than 10¹² Ohm/sq as measured by the Van der Pauw method when applied to a substrate. More particularly, it has a sheet resistance from 10⁵ to 10¹⁰ Ohm/sq, more particularly from 10⁷ to 10⁹ Ohm/sq, as measured by the Van der Pauw method.

In one embodiment, optionally in combination with one or more features of the various embodiments described above or below, the static dissipative material is selected from the group consisting of a clay, a metal oxide, a metal, carbon black, graphite and graphene.

Some examples of metal oxides that may be used as static dissipative material include, without limitation, iron oxide, titanium oxide, tin dioxide, zinc oxide, tin dioxide powder doped with antimony, tin oxide doped with tantalum, niobium or phosphorus.

Some examples of metals that may be used as static dissipative material include without limitation gold, silver, copper, nickel, chromium, palladium, aluminium, tungsten, molybdenum, or platinum.

More particularly, the static dissipative material is a clay. Thus, the invention also relates to a modified clay comprising:
a) a clay, and
b) a plurality of inorganic or organic moieties having two or more reactive functional groups, each reactive functional group being independently selected from the group consisting of a silyl group, a phosphonyl group, a biphosphonyl group, thiol, a carboxyl group, and an epoxy group,
wherein the inorganic or organic moieties are chemically bonded to the clay.

In particular, the clay a) has a sheet resistance equal to or lower than 10¹² Ohm/sq as measured by the Van der Pauw method when applied to a substrate. In particular, the modified static dissipative material has a static contact angle of water from 50 to 130° as measured by the Laplace-Young fitting method when applied to a substrate.

In one embodiment of the invention, optionally in combination with one or more features of the various embodiments described above or below, the static dissipative material is selected from the group consisting of clay, carbon black, graphite and graphene, and the inorganic or organic moieties are chemically bonded to the static dissipative material through a -O-Si- bond. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is selected from the group consisting of clay, carbon black, graphite and graphene, and the inorganic or organic moieties are chemically bonded to the static dissipative material through a -O-P- bond. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is selected from the group consisting of clay, carbon black, graphite and graphene, and the inorganic or organic moieties are chemically bonded to the static dissipative material through a -O-C- bond, more particularly a -O-C(O)-. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is selected from the group consisting of clay, carbon black, graphite and graphene, and the inorganic or organic moieties are chemically bonded to the static dissipative material through a -O-C- bond, more particularly a -O-CH₂-C(OH)-. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is metal, and the inorganic or organic moieties are chemically bonded to the static dissipative material through through a metal-S- bond. More particularly the metal is selected from the group consisting of gold and silver.

### Clays

Clays are mineral silicates which have accessible hydroxyl groups which may be replaced by inorganic or organic compounds having reactive functional groups.

In one embodiment, optionally in combination with one or more features of the various embodiments described above or below, the clay is a natural or synthetic clay, more particularly a synthetic clay.

In another embodiment, optionally in combination with one or more features of the various embodiments described above or below, the clay is a nano-clay.

In another embodiment, optionally in combination with one or more features of the various embodiments described above or below, the clay is selected from the group consisting of laponites, smectites, montmorillonites, bentonites, kaolinites, hectorites, and halloysites, more particularly the clay is a smectite, even more particularly is a laponite.

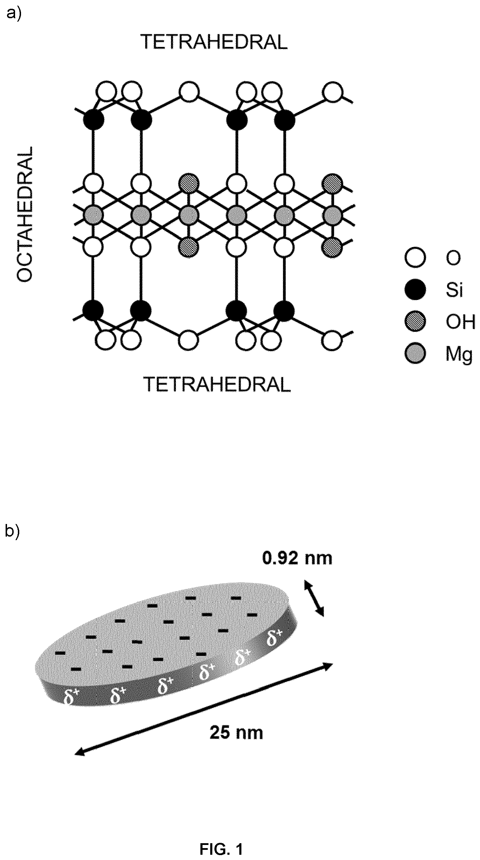

Laponites have a structure and composition closely resembling the natural clay mineral hectorite. Laponites are layered hydrous magnesium silicates which belong to the family of (2:1) phyllosilicates. They are built up of sheets of octahedrally coordinated magnesium oxide sandwiched between two parallel sheets of tetrahedrally coordinated silica (FIG. 1a). Laponites typically have the following unit cell formula (empiric formula): Na_{0.7}Si₈Mg_{5.5}Li_{0.3}O₂₀(OH)₄.

In water laponite forms a colloidal dispersion of charged disk-like particles which have a diameter of about 25 nm and a thickness of about 1 nm with negative charges on the faces and positive charges on the rims (FIG. 1b).

In one embodiment of the invention, optionally in combination with one or more features of the various embodiments described above or below, the static dissipative material is in the form of disk-like particles, more particularly having a diameter from 10 to 50 nm and a thickness from 0.5 to 2 nm, even more particularly with negative charges on the faces and positive charges on the rims.

In one embodiment of the invention, optionally in combination with one or more features of the various embodiments described above or below, the clay has a unit cell formula of Na_{0.7}Si₈Mg_{5.5}Li_{0.3}O₂₀(OH)₄.

Laponites are sold by Rockwood Additives. Non limiting examples of marketed laponites which may be used in the present invention include Laponite XLG^{®}, Laponite RDS^{®}, Laponite JS^{®}, and Laponite RD^{®}. In one embodiment of the invention, optionally in combination with one or more features of the various embodiments described above or below, the clay is Laponite XLG^{®}.

### Inorganic and organic moieties having two or more reactive functional groups

As mentioned above, the modified static dissipative material of the present invention, particularly a clay, comprises a plurality of inorganic or organic moieties having one or more reactive functional groups which are chemically bonded to the static dissipative material. When the static dissipative material is a clay, the inorganic or organic moieties are chemically bonded to the clay. In one embodiment, optionally in combination with one or more features of the various embodiments described above or below, the reactive functional groups are functional groups which are able to form a chemical bond with an atom or group of atoms that are present in the surface of the static dissipative material. More particularly, each of the inorganic or organic moieties is able to form a chemical bond with an atom or group of atoms that are present in the surface of the static dissipative material. In a more particular embodiment, each of the inorganic or organic moieties is able to form a chemical bond with an atom or group of atoms that are present in the surface of the static dissipative material through at least one of its reactive functional groups. In another more particular embodiment, each of the inorganic or organic moieties is able to form a chemical bond with an atom or group of atoms that are present in the surface of the static dissipative material through only one of its reactive functional groups.

In another embodiment, optionally in combination with one or more features of the various embodiments described above or below, the reactive functional groups are functional groups which are able to form a chemical bond with an atom or group of atoms that are present in the surface of the substrate to which the coating is applied. More particularly, each of the inorganic or organic moieties is able to form a chemical bond with an atom or group of atoms that are present in the surface of the substrate to which the coating is applied. In a more particular embodiment, each of the inorganic or organic moieties is able to form a chemical bond with an atom or group of atoms that are present in the surface of the substrate to which the coating is applied through at least one of its reactive functional groups. In another more particular embodiment, each of the inorganic or organic moieties is able to form a chemical bond with an atom or group of atoms that are present in the surface of the substrate to which the coating is applied through one of its reactive functional groups.

According to one embodiment of the invention, optionally in combination with one or more features of the various embodiments described above or below, the inorganic or organic moieties comprise one or more fluoro atoms.

The reactive functional groups of the inorganic or organic moieties can be independently selected from the group consisting of a silyl group, a phosphonyl group, a biphosphonyl group, thiol (-SH), a carboxyl group, and an epoxy group.

In one embodiment, optionally in combination with one or more features of the various embodiments described above or below, the reactive functional groups are hydrolisable groups, more particularly the hydrolysable groups are selected from the group consisting of a silyl group, a phosphonyl group, a biphosphonyl group, and a carboxyl group.

In another embodiment, optionally in combination with one or more features of the various embodiments described above or below, the inorganic or organic moieties have two reactive functional groups, more particularly one of the two reactive functional groups is attached to the static dissipative material, and the other one is placed at the end of the moiety (i.e. far from the surface of the static dissipative material), and is able to form a chemical bond with an atom or group of atoms that are present in the surface of the substrate to which the coating is applied.

In one embodiment, optionally in combination with one or more features of the various embodiments described above or below, the silyl group has the formula: 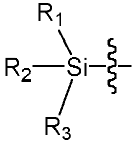 wherein R₁-R₃ are independently selected from the group consisting of halogen, hydroxyl, -(C₁-C₃₀)alkyl, and -O(C₁-C₃₀)alkyl, with the condition that at least one of R₁-R₃ is hydroxyl or -O(C₁-C₃₀)alkyl. More particularly, R₁-R₃ are independently selected from the group consisting of halogen, hydroxyl, -(C₁-C₁₅)alkyl, and -O(C₁-C₁₅)alkyl, with the condition that at least one of R₁-R₃ is hydroxyl or -O(C₁-C₁₅)alkyl. Even more particularly, R₁-R₃ are independently selected from the group consisting of halogen, hydroxyl, -(C₁-C₆)alkyl, and -O(C₁-C₆)alkyl, with the condition that at least one of R₁-R₃ is hydroxyl or -O(C₁-C₆)alkyl.

The groups R₁-R₃ may be the same or different. In one embodiment, optionally in combination with one or more features of the various embodiments described above or below, R₁-R₃ are independently selected from the group consisting of halogen; and -O(C₁-C₃₀)alkyl, more particularly -O(C₁-C₁₅)alkyl, and even more particularly -O(C₁-C₆)alkyl. In another embodiment, optionally in combination with one or more features of the various embodiments described above or below, R₁-R₃ are the same and are halogen or -O(C₁-C₃₀)alkyl. More particularly, R₁-R₃ are the same and are -O(C₁-C₃₀)alkyl, even more particularly -O(C₁-C₁₅)alkyl, and even more particularly -O(C₁-C₆)alkyl.

In another embodiment, optionally in combination with one or more features of the various embodiments described above or below, the phosphonyl and biphosphonyl groups have the formulas: 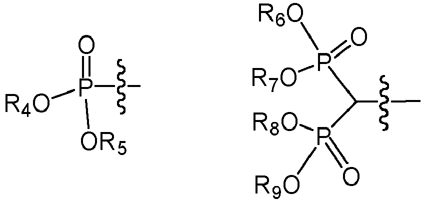 respectively, wherein R₄-R₉ are independently selected from the group consisting of hydrogen and -(C₁-C₃₀)alkyl. The groups R₄-R₅ or R₆-R₉ may be the same or different. More particularly, -(C₁-C₃₀)alkyl in R₄-R₉ is -(C₁-C₁₅)alkyl and even more particularly -(C₁-C₆)alkyl.

In another embodiment, optionally in combination with one or more features of the various embodiments described above or below, the carboxyl group has the formula 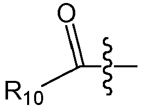 wherein R₁₀ is independently selected from the group consisting of hydroxyl, halogen, and -O(C₁-C₃₀)alkyl. More particularly, -O(C₁-C₃₀)alkyl in R₁₀ is -O(C₁-C₁₅)alkyl and even more particularly -O(C₁-C₆)alkyl.

In another embodiment, optionally in combination with one or more features of the various embodiments described above or below, the epoxy group has the formula: 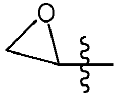 and can be unsubstituted or optionally substituted in any epoxy carbon atom.

In another embodiment, optionally in combination with one or more features of the various embodiments described above or below, each reactive functional group is independently selected from the group consisting of a silyl group of the formula: 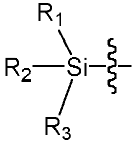 a phosphonyl group of the formula: 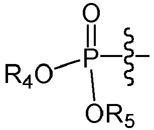 a biphosphonyl group of the formula: 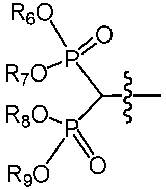
a thiol (-SH);
a carboxyl group of the formula: 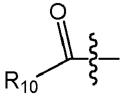
and an epoxy group;
wherein R₁-R₁₀ are independently as previously defined.

In another embodiment, optionally in combination with one or more features of the various embodiments described above or below, at least one of the reactive functional groups, and particularly each of the reactive functional groups, has the formula: 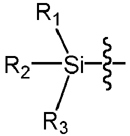 wherein R₁-R₃ are independently as previously defined, more particularly R₁-R₃ are selected from methoxy, ethoxy, propoxy and chloro, and even more particularly are ethoxy.

The moieties having reactive functional groups, in particular moieties comprising one or more fluoro atoms, may be inorganic or organic moieties having low or high molecular weight. They can be discrete molecules or polymers.

In one embodiment, optionally in combination with one or more features of the various embodiments described above or below, the moieties having reactive functional groups, in particular moieties comprising one or more fluoro atoms, have a molecular weight (Mw) equal to or lower than 50000 g/mol.

In another embodiment, optionally in combination with one or more features of the various embodiments described above or below, the moieties having reactive functional groups, in particular moieties comprising one or more fluoro atoms, are inorganic. In another embodiment, optionally in combination with one or more features of the various embodiments described above or below, the moieties having functional groups, in particular moieties comprising one or more fluoro atoms, are organic.

In another embodiment, optionally in combination with one or more features of the various embodiments described above or below, the moieties having two or more reactive functional groups, in particular moieties comprising one or more fluoro atoms, comprise a carbon chain comprising at least one -(CR₁₄R₁₅)- moiety wherein R₁₄ and R₁₅ are independently selected from the group consisting of H and F. More particularly, at least one of R₁₄ or R₁₅ is F.

In another embodiment, optionally in combination with one or more features of the various embodiments described above or below, the moieties having two or more reactive functional groups, in particular moieties comprising one or more fluoro atoms, comprise a carbon chain comprising at least one -(CR₁₄R₁₅)-O- moiety wherein R₁₄ and R₁₅ are independently selected from the group consisting of H and F. More particularly, at least one of R₁₄ or R₁₅ is F.

In another embodiment, optionally in combination with one or more features of the various embodiments described above or below, the moieties having two or more reactive functional groups, in particular moieties comprising one or more fluoro atoms, are polymer moieties, more particularly fluoropolymer moieties, and even more particularly perfluoropolyether moieties.

For the purposes of the invention, a fluoropolymer is a fluorocarbon-based polymer with multiple carbon-fluorine bonds. Perfluoropolyethers (PFPEs) are a class of polymers which consists of carbon, oxygen and fluorine atoms. The molecular structure can be branched, linear, or a combination thereof depending on the desired physical properties. PFPEs typically have molecular weights from 500 to 100000 g/mol.

In one embodiment of the invention, optionally in combination with one or more features of the various embodiments described above or below, the perfluoropolyether moieties comprise the repetitive unit of the formula -(CₓF₂ₓO)_{y}-, wherein x is a value from 1 to 6, and y is a value from 2 to 500. More particularly, the perfluoropolyether moieties comprise a repetitive unit of the formula: 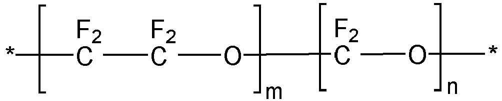 wherein m is from 0 to 500 and n is from 0 to 500, with the condition that when one of m or n is 0, then the other of m or n is other than 0.

In a more particular embodiment, the perfluoropolyether moieties comprise the following formula: 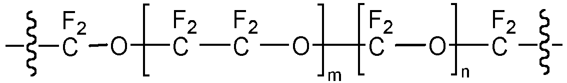 wherein m and n are as defined above.

In a more particular embodiment, the perfluoropolyether moieties comprise the following formula: 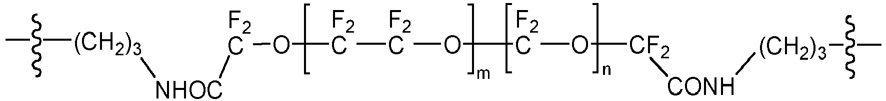 wherein m is from 100 to 400 and n is from 100 to 400, and each of the ends of the polymer are attached to a reactive functional group as defined herein. In an even more particular embodiment, m+n is a value from 9-13 and m/n is from 1-2. In another more particular embodiment, m+n is 40 and m/n is from 0.5-2.

In another more particular embodiment, the perfluoropolyether moieties comprise the following formula: 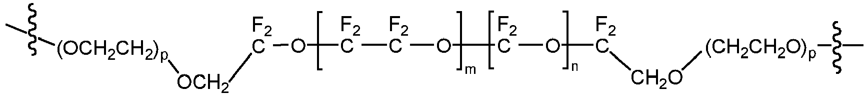 wherein m and n are as previously defined and p is from 1 to 20.

In another embodiment of the invention, optionally in combination with one or more features of the various embodiments described above or below, the compound having two or more reactive functional groups is a silicone polymer, more particularly, a silicone polymer which comprises a repetitive unit of the formula: 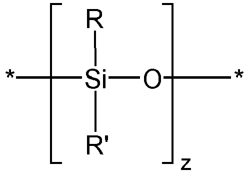 wherein R and R' independently are -(C₁-C₃₀)alkyl or -(C₃-C₁₀)cycloalkyl, and z is a value from 10 to 50000.

In another embodiment of the invention, optionally in combination with one or more features of the various embodiments described above or below, the inorganic or organic moieties having two or more reactive functional groups comprise a carbon chain comprising at least one -(CR₁₂R₁₃)- moiety wherein R₁₂ and R₁₃ are independently selected from the group consisting of H and F, more particularly wherein at least one of R₁₂ or R₁₅ is F, or a silicone polymer which comprises a repetitive unit of the formula: 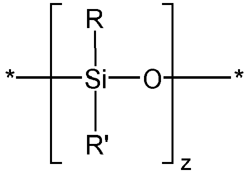 wherein R and R' are as previously defined.

As mentioned above the inorganic or organic compounds moieties are chemically bonded to the static dissipative material. In one embodiment, optionally in combination with one or more features of the various embodiments described above or below, the modified static dissipative material is obtainable by chemically grafting an inorganic or organic compound having two or more reactive functional groups, to the static dissipative material, through at least one of the reactive functional groups and the functional groups present on the surface of the static dissipative material. In the case of a clay, the modified clay is obtainable by chemically grafting an inorganic or organic compound having two or more reactive functional groups, to the clay through at least one of the reactive functional groups and the hydroxyl groups present on the surface of the clay. The two or more reactive functional groups inorganic or organic compound are selected from the group consisting of a silyl group, a phosphonyl group, a biphosphonyl group, thiol, a carboxyl group, and an epoxy group, as defined herein.

In the case of a clay, when the reactive functional group which reacts with the clay is a silyl group, the chemical bond formed between the static dissipative material and the inorganic or organic compound is a -O-Si- bond. When the reactive functional group which reacts with the clay is a phosphonyl group or a biphosphonyl group, the chemical bond formed between the static dissipative material and the inorganic or organic compound is a -O-P- bond. When the reactive functional group which reacts with the clay is a carboxyl group or an epoxy group, the chemical bond formed is a -O-C- bond. Accordingly, in one embodiment, the inorganic or organic moieties are attached to the static dissipative material through -O-Si-, -O-P-, metal-S-or-O-C- chemical bonds. More particularly, the inorganic or organic moieties are attached to the static dissipative material, particularly a clay, through -O-Si- chemical bonds.

In one embodiment of the invention, optionally in combination with one or more features of the various embodiments described above or below, the static dissipative material is selected from the group consisting of clay, carbon black, graphite and graphene, and the reactive functional group comprises a silyl group, in particular a silyl group which is attached to the static dissipative material through a -O-Si- bond. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is selected from the group consisting of clay, carbon black, graphite and graphene, and the reactive functional group comprises a phosphonyl group, in particular a phosphonyl group which is attached to the static dissipative material through a -O-P- bond. In particular, carbon black, graphite and graphene are oxidised carbon black, oxidised graphite and oxidised graphene, respectively.

The interaction between a static dissipative material selected from the group consisting of clay, carbon black, graphite and graphene and a bisphosphonate can be carried out under reaction conditions well-known in the art such as for example as described in Journal of Materials Science: Materials in Medicine 2020, 31(11), 1-13).

In another embodiment of the invention, optionally in combination with one or more features of the various embodiments described above or below, the static dissipative material is selected from the group consisting of clay, carbon black, graphite and graphene, and the reactive functional group comprises a carboxyl group, in particular a carboxyl group which is attached to the static dissipative material through a -O-C- bond, more particularly a -O-C(O)-. In particular, carbon black, graphite and graphene are oxidised carbon black, oxidised graphite and oxidised graphene, respectively.

In another embodiment of the invention, optionally in combination with one or more features of the various embodiments described above or below, the static dissipative material is selected from the group consisting of clay, carbon black, graphite and graphene, and the reactive functional group comprises an epoxy group, in particular a carboxyl group which is attached to the static dissipative material through a -O-C- bond, more particularly a -O-CH₂-C(OH)-. In particular, carbon black, graphite and graphene are oxidised carbon black, oxidised graphite and oxidised graphene, respectively.

The reaction between a static dissipative material selected from the group consisting of clay, carbon black, graphite and graphene with an epoxide can be carried out under reaction conditions well-known in the art such as for example as described in Current Organic Chemistry 2013, 17(9), 900-912.

Oxidation of carbon black, graphite and graphene may be performed with an acid treatment such as HNO₃, a termic treatment or plasma.

In another embodiment of the invention, optionally in combination with one or more features of the various embodiments described above or below, the static dissipative material is metal, and the reactive functional group comprises a thiol group, in particular a thiol group which is attached to the static dissipative material through a metal-S- bond. More particularly the metal is selected from the group consisting of gold and silver.

In one embodiment of the invention, optionally in combination with one or more features of the various embodiments described above or below, the inorganic or organic compound used to functionalise the static dissipative materials has two reactive functional groups as previously defined. In a more particular embodiment, the two reactive functional groups are placed each at one end of the compound. In another more particular embodiment, the two reactive functional groups are the same.

In another embodiment, optionally in combination with one or more features of the various embodiments described above or below, each reactive functional group of the inorganic or organic compound used to functionalise the static dissipative materials is independently selected from the group consisting of a silyl group of the formula: 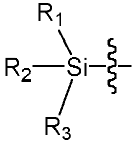 a phosphonyl group of the formula: 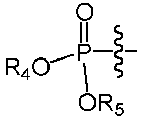 a biphosphonyl group of the formula: 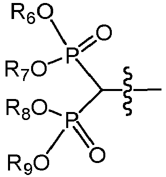
a thiol (-SH);
a carboxyl group of the formula: 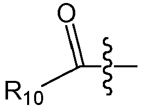
and an epoxy group;
wherein R₁-R₁₀ are independently as previously defined.

In another embodiment, optionally in combination with one or more features of the various embodiments described above or below, the reactive functional groups of the inorganic or organic compound, in particular comprising one or more fluoro atoms, used to functionalise the static dissipative materials, particularly two reactive functional groups, and more particularly two reactive functional groups placed each at one end of the compound, have the formula: 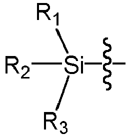 wherein R₁-R₃ are independently as previously defined.

Further embodiments indicated above for the inorganic or organic moieties also apply to the inorganic or organic compounds.

In one embodiment of the invention, optionally in combination with one or more features of the various embodiments described above or below, the inorganic or organic compound used to functionalise the static dissipative materials is a perfluoropolyether which has the formula: 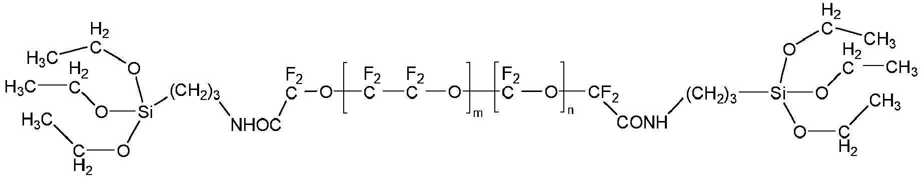 wherein m is from 100 to 400 and n is from 100 to 400.

The above polymer is commercially available under the name Fluorolink ^{®} S10 (Solvay Solexis).

In another embodiment of the invention, optionally in combination with one or more features of the various embodiments described above or below, the inorganic or organic compound used to functionalise the static dissipative materials is a perfluoropolyether which has the formula: 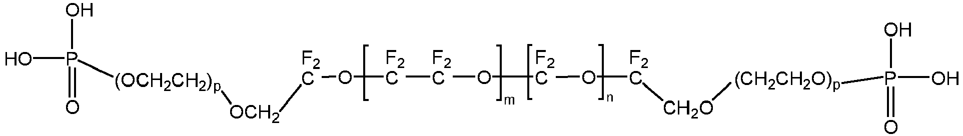 wherein m, n and p are as previously defined.

The above polymer is commercially available under the name Fluorolink ^{®} P54 (Solvay Solexis).

### Modified static dissipative materials

As previously mentioned, the static dissipative materials of the invention are produced by functionalising unmodified static dissipative materials, with certain inorganic or organic compounds through reactive functional groups contained in these compounds by methods well-known in the art. The skilled person will be able to determine in each case the type of reaction to be used depending on the static dissipative materials and the inorganic or organic functionalising compound.

The reactive functional groups (at least two and particularly, each placed at one end of the molecule) serve both to anchor the compound to the static dissipative material as well as to the substrate when the latter is coated thereby improving its adhesion to the substrate. For the purposes of the invention the term "functionalisation" or "modification" refers to the weight/weight % of the inorganic or organic moieties with respect to the static dissipative materials. The degree of functionalisation may be measured by thermal gravimetric analysis (TGA).

In one embodiment, optionally in combination with one or more features of the various embodiments described above or below, the weight of the inorganic or organic moieties with respect to the weight of the static dissipative material, in particular the clay, is at least 3% (i.e. functionalisation of 3%) or at least 5% (i.e. functionalisation of 5%) as measured by thermal gravimetric analysis. More particularly, the weight of the inorganic or organic moieties with respect to the weight of the static dissipative material is about 3%, about 12%, about 25%, about 41%, or about 48% as measured by thermal gravimetric analysis.

In another embodiment, optionally in combination with one or more features of the various embodiments described above or below, the weight of the inorganic or organic moieties with respect to the weight of the static dissipative material, in particular the clay, is from 5% to 100%, from 5% to 75%, from 10% to 65%, from 35 to 65%, from 35 to 50%, and even more particularly about 41%.

In another embodiment, optionally in combination with one or more features of the various embodiments described above or below, the modified static dissipative material has a static contact angle of water from 50° to 130°, more particularly from 60° to 120°, and even more particularly about 114°, as measured by the Laplace-Young fitting method when applied to a substrate.

### Coating compositions

The modified static dissipative materials of the present invention may be formulated into coating compositions to protect a variety of substrates. Thus, the invention also relates to coating compositions comprising the modified static dissipative material as defined herein and one or more carriers or additives. In one embodiment, optionally in combination with one or more features of the various embodiments described above or below, the coating composition consists of the modified static dissipative material as defined herein and one or more carriers or additives.

Non-limiting examples of additives include pigments, UV shielding agents, antimicrobial agents, mechanical enhanced additives, anti-fouling agents, wetting agents, thickening agents, hardening agents, toughening agents, plasticizers and stabilizers.

In one embodiment, optionally in combination with one or more features of the various embodiments described above or below, the coating composition is a dispersion of the modified static dissipative material in a solvent. Any solvent may be used provided that is capable of dispersing modified static dissipative material. In a more particular embodiment, the solvent is selected from the group consisting of a (C₁-C₆)alcohol, water and mixtures thereof. In another particular embodiment, the composition contains the modified static dissipative material in an amount from 0.1 to 50%, more particularly from 0.5 to 25%, even more particularly from 1 to 5%, by weight with respect to the total volume of the composition.

It also forms part of the invention a process for the preparation of a coating composition comprising the modified static dissipative material as previously defined which comprises dispersing the modified static dissipative material in a suitable solvent, in particular using the solvents and amounts as previously defined, and optionally adding one or more additives.

In a particular embodiment, the invention relates to a process for the preparation of a coating composition as previously defined, which comprises:
a) providing a dispersion of the unmodified static dissipative material in a solvent;
b) adding an inorganic or organic compound having two or more reactive functional groups, each being independently selected from the group consisting of a silyl group, a phosphonyl group, a biphosphonyl group, thiol, a carboxyl group, and an epoxy group to form a chemical bond between the static dissipative material and the inorganic or organic compound; and
c) dispersing the modified static dissipative material in a suitable solvent and optionally adding one or more additives.

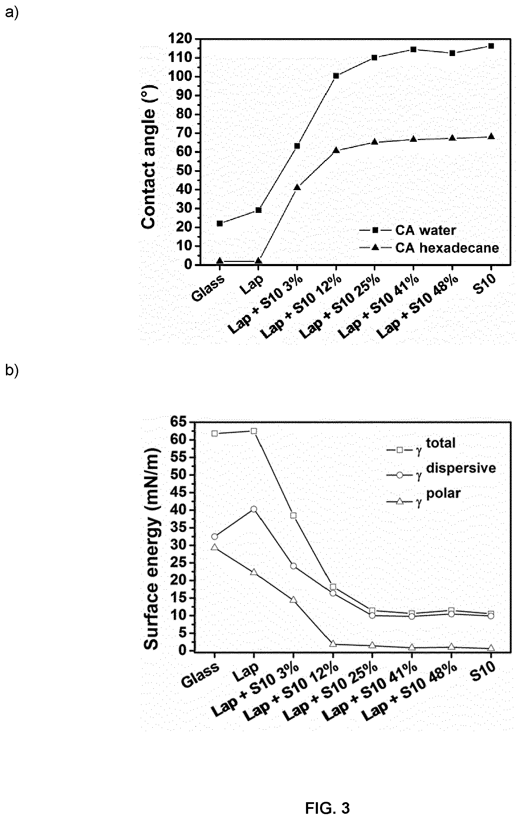

The low affinity for liquids of the coating compositions of the present invention, i.e., their liquid repellence capability, is illustrated in FIG. 3A. As can be seen, the contact angles shown for substrate coated with the modified static dissipative materials of the invention are significantly higher than the ones shown for the uncoated substrate.

In one embodiment, optionally in combination with one or more features of the various embodiments described above or below, the coating composition has a static contact angle of water from 50 to 130°, more particularly from 60° to 120°, and even more particularly about 114°, as measured by the Laplace-Young fitting method when applied to a substrate.

In another embodiment, optionally in combination with one or more features of the various embodiments described above or below, the coating composition has a static contact angle of hexadecane from 30° to 80°, more particularly from 35° to 70°, and even more particularly about 67°, as measured by the Laplace-Young fitting method when applied to a substrate.

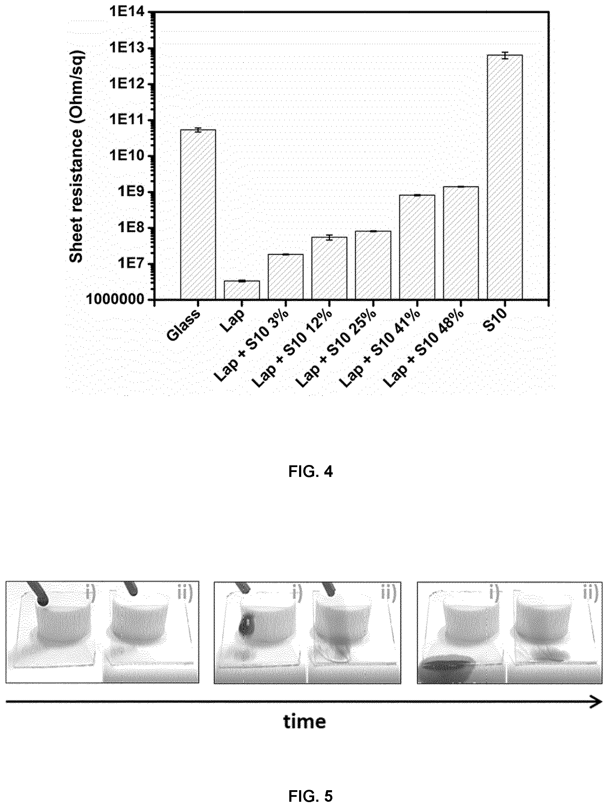

The compositions of the invention also show repellency for solids (dust), i.e. antistatic properties, as illustrated in FIG. 3b and FIG. 4. Electrostatic forces induce the adhesion of dust particles on dielectric materials representing a significant source of surface contamination. The presence of antistatic materials on solid surfaces may lead to the reduction of the electrostatic charge build-up diminishing the interaction between contaminant particles and material surface, and therefore reducing the deposition of dust particles. As can be seen in FIG. 4 the sheet resistance of the substrate decrease when using the coatings of the invention.

In one embodiment, optionally in combination with one or more features of the various embodiments described above or below, the coating composition has a surface free energy from 5 to 50 mN/m, more particularly from 7 to 30 mN/m, and even more particularly about 11 mN/m, as measured by the Fowkes model when applied to a substrate.

In one embodiment, optionally in combination with one or more features of the various embodiments described above or below, the coating composition has a sheet resistance from 1.0·10⁷ to 2.0·10⁹ Ohm/sq, more particularly from 5.0·10⁷ to 1.0·10⁹ Ohm/sq, and even more particularly about 8.2·10⁸ Ohm/sq, as measured by the Van der Pauw method when applied to a substrate.

One of the most demanded requirements for practical application of coatings is their mechanical resistance. In one embodiment, optionally in combination with one or more features of the various embodiments described above or below, the coating composition has a static contact angle of water as measured by the Laplace-Young fitting method which does not vary more than//varies less than 10%, more particularly less than 7%, before and after 50 abrasion cycles when applied to a substrate.

In one embodiment, optionally in combination with one or more features of the various embodiments described above or below, the coating composition has coating thickness as measured by FESEM micrographs which does not vary more than//varies less than 10%, more particularly less than 5%, before and after 50 abrasion cycles when applied to a substrate.

In one embodiment, optionally in combination with one or more features of the various embodiments described above or below, the coating composition is transparent, i.e. the transmittance (%) in in the visible region (approx. 380 - 750 nm) is higher than about 80%.

### Process for the preparation of modified static dissipative materials and compositions thereof

According to a third aspect of the invention a process for the preparation of the modified static dissipative material as previously defined is provided. This process comprises the following steps:
a) providing a dispersion of the unmodified static dissipative material in a solvent; and
b) adding an inorganic or organic compound having two or more reactive functional groups, each being independently selected from the group consisting of a silyl group, a phosphonyl group, a biphosphonyl group, thiol, a carboxyl group, and an epoxy group to form a chemical bond between the static dissipative material and the inorganic or organic compound.

In one embodiment, optionally in combination with one or more features of the various embodiments described above or below, step a) is carried out by adding the unmodified static dissipative material in small amounts, in particular under stirring until their complete dispersion, more particularly under stirring for a period from 30 min to 24 h.

In another embodiment, optionally in combination with one or more features of the various embodiments described above or below, the inorganic or organic compound used of step b) is slowly incorporated to the dispersion of step a).

In another embodiment, optionally in combination with one or more features of the various embodiments described above or below, the inorganic or organic compound having two or more reactive functional groups is added as a solution. More particularly, the solvent of the solution containing an inorganic or organic compound used in step b) is a (C₁-C₆)alcohol, such as ethanol or isopropanol, more particularly isopropanol.

The reaction may take place at room temperature or by heating. In one embodiment, optionally in combination with one or more features of the various embodiments described above or below, after step b) the mixture is heated at a temperature from 40 °C to 100 °C, more particularly at a temperature of about 60 °C, even more particularly under stirring for a period of time from 30 min to 24 h.

If an excess of inorganic or organic compound having two or more reactive functional groups is used in step b), the unreacted inorganic or organic compound may be removed from the reaction mixture after step b).

If a solvent is used in step b) then the solvent can be also after step b).

In another embodiment, optionally in combination with one or more features of the various embodiments described above or below, the process further comprises step c) after step b) of removing the unreacted inorganic or organic compound. In one embodiment, step c) is carried out by centrifugation, in particular at about 3500 rpm for a period of time from 20 to 60 min, and removing the supernatant.

Optionally, after step b) or step c) the obtained modified static dissipative material can be purified by redispersing it in a suitable solvent and removing the solvent together with the unreacted inorganic or organic compound and solvent. In one embodiment, optionally in combination with one or more features of the various embodiments described above or below, the solvent is selected from a (C₁-C₆)alcohol, water and mixtures thereof. More particularly, the solvent is a mixture of an alcohol and water, even more particularly the (C₁-C₆)alcohol is isopropanol, and even more particularly, the solvent is a mixture is isopropanol and water 1:1.

Moreover, the invention is also related to the modified static dissipative material as previously defined which is obtainable by chemically grafting a plurality of inorganic or organic moieties having two reactive functional groups to the static dissipative material through one of the reactive functional groups, wherein each reactive functional group is independently selected from the group consisting of a silyl group, a phosphonyl group, a biphosphonyl group, thiol, a carboxyl group, and an epoxy group.

More particularly, the invention refers to the modified static dissipative material as previously defined which is obtainable by the process comprising the following steps:
a) providing a dispersion of the unmodified static dissipative material in a solvent; and
b) adding an inorganic or organic compound having two or more reactive functional groups, each reactive functional group being independently selected from the group consisting of a silyl group, a phosphonyl group, a biphosphonyl group, thiol, a carboxyl group, and an epoxy group to form a chemical bond between the static dissipative material and the inorganic or organic compound.

The expression modified static dissipative material "obtainable by" is used herein for defining the modified static dissipative material by its preparation process and refers to the product that can be obtained through the preparation process which comprises the steps mentioned herein. For the purposes of the invention, the expressions "obtainable", "obtained" and similar equivalent expressions are used interchangeably and, in any case, the expression "obtainable" encompasses the expression "obtained".

### Process for coating at least part of the surface of a substrate

A fourth aspect of the invention relates to a process for coating at least part of the surface of a substrate which comprises applying the coating composition as previously defined to at least part of the surface of a substrate. Non-limiting examples of substrates which can be coated with the coating compositions of the invention include for example glass, metal, alloy, synthetic polymer, natural polymer, ceramic, or the like.

In one embodiment, optionally in combination with one or more features of the various embodiments described above or below, the process comprises forming a film, particularly a homogeneous and continuous film, over at least part of the surface of the substrate.

These films can be prepared by conventional coating methods such as casting, bar-coating, dip-coating, blade-coating, or spin-coating techniques.

In one embodiment, optionally in combination with one or more features of the various embodiments described above or below, the process comprises using the bar-coating technique.

After applying the coating to the substrate, a final curing step may optionally be performed, particularly at a temperature from room temperature to 100 °C, more particularly for a period of time from 0 min to 24 h.

Optionally, prior to the coating deposition, the substrate may be cleaned, and/or activated. Typically, cleaning may comprise a washing step using soap and rinsing the substrate with thoroughly water. Additionally, substrates may be immersed once or successively in a solvent or a mixture of solvents such as water, isopropanol, acetone, or mixtures thereof, in particular under sonication. Activation of the substrate is used with the aim to generate hydroxyl groups in the substrate surface prone to promote chemical bonds between the surface and the reacting groups (e.g. silanol groups) present in the inorganic or organic compound. Activation may be carried out by immersing a substrate, in particular a cleaned substrate, in 10 wt. % NaOH aqueous solution in the case of glass or by treating it with oxygen plasma in the case of PC or PVC.

Thus, in a particular embodiment, the invention relates to a process for coating at least part of the surface of a substrate, which comprises:
i) optionally cleaning the substrate as defined above;
ii) optionally activating the substrate as defined above;
iii) applying the coating composition of the invention to at least part of the surface of the optionally cleaned and/or activated substrate, in particular by forming a film over at least part of the surface of the substrate;
iv) optionally drying the substrate; and
v) optionally curing the coating, particularly at a temperature from room temperature to 100 °C for a period of time from 0 min to 24 h.

An aspect of the present invention also relates to the article of manufacture coated with the coating composition as previously defined.

Throughout the description and claims the word "comprise" and variations of the word, are not intended to exclude other technical features, additives, components, or steps.

Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention.

### Examples

### Materials and methods

Laponite grades XLG from Rockwood Additives Ltd. was kindly provided by Azelis and Comindex, respectively. Laponite is a uniform disc-shaped synthetic clay with disc diameters of 25 nm and thicknesses of 1 nm. Fluorolink S10 was purchased from Acota. Isopropanol (99.5 %) was acquired from Scharlab. All chemicals were used as received. Deionized water with a conductivity < 1 µS was used in all experiments. Glass substrates with 1 mm thickness were obtained from Deltalab S.L. with reference D100001 and cut into 25 x 25 mm squares. Polycarbonate (PC) sheets acquired from sefar maissa and cut into 25 x 25 mm squares.

Fourier transform infrared spectra (FT-IR) of the solids were obtained by Attenuated Total Reflectance (ATR) technique with a Jasco 4100 FTIR, from 400 cm-1 to 4000 cm-1.

Thermal gravimetric analysis (TGA) was carried out on a TA instruments Q500 thermobalance. Samples were heated at a rate of 10 °C/min from ambient temperature to 700 °C under a nitrogen flow of 60 mL/min.

Morphological properties of the film were analyzed using ULTRA plus ZEISS field emission scanning electron microscope (FE-SEM).

KSV CAM 200 and Attension Theta Lite Optical tensiometers were used to determine the static contact angles and the SFE of the films. Solvent droplets were placed at a minimum of three different areas of each surface. The static contact angles were recorded using the Laplace-Young fitting method. SFE of coatings was calculated according to the Fowkes model using water and ethylene glycol as polar liquids and diiodomethane as non-polar liquid.

Sheet resistance of the films was measured at atmospheric pressure and room temperature conditions using a Keithley Semiconductor Characterization System 4200-SC with a four-point probe.

### Example 1 - XLG Laponites functionalisation with PFPE S10

Functionalisation of XLG laponites (Lap) was carried out by chemically grafting PFPE S10 on Lap surface. Briefly, 25 mL of deionized water were introduced to a 100 mL roundbottomed flask and 1 g of Lap was added in small amounts under vigorous stirring until their complete dispersion. After stirring for 1 h, an isopropanol (20 g) solution containing varying amounts (0.05-1 g) of S10 to produce different S10-Lap functionalisation degrees was slowly incorporated to the dispersion. The mixture was remained under stirring and refluxed at 60 °C overnight. After cooling to room temperature, the whitish gel obtained was centrifuged at 3500 rpm during 20 min. The supernatant was removed and the gel redispersed in a water/isopropanol (1/1) mixture followed by centrifugation twice in order to remove the unbounded material. Subsequently, the gel was redispersed in water/isopropanol (1/1) to obtain 25 mL of 4% (w/v) Lap dispersion.

The degree of functionalisation of the obtained modified laponites as measured by TGA is shown in the table 1 below:

**Table 1**

| Amount of S10 added to the laponite (wt. %) | Degree of functionalisation of the modified laponites (wt. %) |
|---|---|
| 5 | 3 |
| 25 | 12 |
| 50 | 25 |
| 75 | 41 |
| 100 | 48 |

### Example 2 - Fabrication of coatings

Prior to the coating deposition, glass and PC substrates were cleaned and activated. The cleaning process involves a washing step using soap and rinsed with thoroughly water. After that, glass substrates were immersed in deionized water, isopropanol and acetone successively under sonication for 5 min each one. The same process was applied to PC substrates without the acetone immersion step. With the aim to generate hydroxyl groups in the substrate surface prone to promote chemical bonds between the surface and the silanol groups present in the PFPE molecules, the cleaned substrates were activated by immersion in 10 wt. % NaOH aqueous solution in the case of glass while the PC ones were treated with oxygen plasma during 5 min (40 kHz, 200 W).
- **Laponite and PFPE functionalised laponite coatings:** the pure Lap dispersion and the formulations containing different S10/Lap composition rates (Example 1) were deposited on both, glass and PC substrates using the bar-coating technique. A road shaped 100 µm size wire coil bar at room temperature and a speed of 50 mm/s was employed for the coating application. A final curing step was carried out at 80 °C for 1 h.
- **S10 PFPE coatings:** the S10 coating was prepared by immersion of glass and PC substrates on a 0.2 wt. % isopropanol solution of S10 containing a 0.8 wt. % of water and a 0.2 wt. % of hydrochloric acid (10 %) during 5 minutes. After that, a thermal curing process was performed in two steps. Firstly, 15 minutes at 100 °C followed by 15 additional minutes at 150 °C.

The coatings were characterised by ATR-FTIR and TGA (FIG. 2b and c).

### Wettability properties of the coatings

The wettability properties of the films prepared from the formulations containing different rates of S10/Lap were examined through contact angle (CA) measurements using water and hexadecane as probe liquids (FIG. 3a). The addition of small amounts of S10 (3 wt. %) to the Lap formulation resulted in films with a significant increase on the CAs evolving from 29° to 63° for water and from 2° to 41° for hexadecane. These values continued to grow notably with increasing the S10 content to a 12 wt. %, attained 100° and 61° for water and hexadecane, respectively. Above this S10 amount, the CAs proceeded to rise slightly as the S10 content increases reaching 114° for water and 67° for hexadecane using the formulation with a S10/Lap rate of 41 wt. %. It is noted that the CAs obtained for the coatings prepared from formulations containing both a 41 wt. % and a 48 wt. % of S10 exhibited very similar wetting properties to those observed for the pure S10 coating which possess water and hexadecane contact angles of 116° and 68°, respectively. This result corroborates the low affinity for liquids of the films prepared from the formulations of the invention and therefore, their promising liquid repellence capabilities.

Another important parameter directly related to the interaction that a surface establishes with a liquid is the surface free energy (SFE) which is defined by the Fowkes model as the sum of its polar and non-polar (dispersive) contribution. FIG. 3b displays the surface free energy determined for all the coatings according to the Fowkes model as well as, the contribution of their polar and dispersive components. The SFE of the pristine Lap coating (62 mN/m) is almost the same as the glass substrate (63 mN/m) due to their similar chemical composition mostly based on SiO₂. When S10 was introduced to the Lap formulations the SFE decreased sharply showing values ranging from 38 mN/m for the film prepared with a S10/Lap rate of 3 wt. % to 11 mN/m for the coatings with a S10/Lap rate over 25 wt. %. Hence, these low SFE values determined for the prepared films support the weak interaction between their surfaces and liquids of different nature (with a surface tension higher than 11 mN/m). Regarding to the polar and non-polar components of the SFE both of them exhibited the same tendency, declining as the content of S10 increases. However, it should be noted, that for coatings prepared from formulations with S10/Lap rates above 25 % the polar contribution was extremely low compared to the dispersive one. Consequently, the interactions between the prepared films and polar liquids are expected to be almost lacking.

### Antistatic properties of the coatings

In order to verify the antistatic effect of Lap on the developed coatings containing different amounts of S10 their sheet resistance was measured by Van der Pauw method (FIG. 4). The glass substrate used as reference had a sheet resistance in the range of 10¹⁰ Ω/square which was reduced by four orders of magnitude through the deposition of a pure Lap film. Regarding the coatings prepared from formulations containing functionalised Lap, the sheet resistance increases with increasing S10/Lap rate reaching values ranging from 10⁷ to 10⁹ Ω/square and therefore preserving the antistatic behavior. Conversely, the pure S10 film showed a resistance value (in the range of 10¹² Ω/square) significantly higher than those observed for both pure Lap and functionalised Lap coatings. This result highlights that the antistatic properties of the Lap were successfully incorporated into the omniphobic films giving rise to promising multifunctional surfaces.

### Self-cleaning performance of the coatings

In order to verify the self-cleaning performance of the coatings of the invention their ability to repel liquids was evaluated. The formulation with a S10/Lap rate of 41 wt. % was selected. Water and olive oil were used as polar and non-polar representative contaminant liquids, respectively. The liquid repellence test was carried out by two ways. The first one involved the deposition of water droplets on the surface of the samples previously tilted around 20°.

As can be seen in FIG. 5, the droplets easily rolled down on the coated surfaces without leaving any trace behind. In contrast, the droplets placed onto untreated samples slid along the surfaces leaving deep marks on their pathways. The second one consisted on the sample immersion in a tank containing methylene tinted water. It is noteworthy that the coated sample remained absolutely clean after the immersion process. Conversely, the untreated substrate left the tank completely covered by the contaminant liquid.

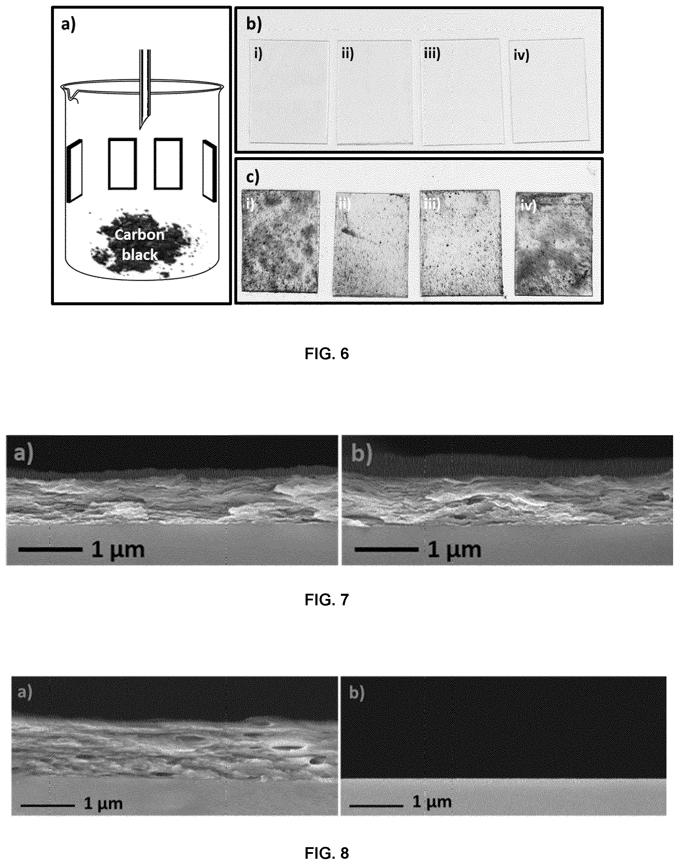

Once demonstrated the liquid repellency capabilities of the coating of the invention, the adhesion of carbon black particles acting as solid fouling agent was evaluated (FIG. 6). The coating with S10/Lap rate of 41 wt. % was placed vertically attached to the inner wall of a closed container containing carbon black powder (FIG. 6). Afterwards, an air stream was applied during 10 seconds generating a carbon black cloud. PC substrate and PC coated with both, pristine Lap and pure S10 were also included in the essay for comparative purposes (FIG. 6b). After the dust repellence test, dusty surfaces were obtained as is shown in FIG. 6c. The photographs reveal that carbon black powder was adhered on the four tested samples. However, the amount of dust particles deposited on films containing Lap (pristine Lap (ii) and functionalised Lap with a S10/Lap rate of 41 wt. % (iii)) was significantly lower compared with those adhered on PC substrate (i) and S10 modified PC (iv). Note that the surface free energy of the PC substrates coated with both, S10/Lap 41 wt. % formulation and pure S10 are almost the same (around 11 mN/m) and, consequently, the observed reduction on the adhesion of the carbon black powder can be attributed to antistatic effects (without the influence of surface free energy). This result confirms the potential of the film of the invention to mitigate fouling associated with dust particles as a result of its antistatic properties induced by the presence of the Lap.

### Mechanical resistance of the film of the invention

In order to evaluate the robustness of the developed coating rub abrasion essays were performed with a crockmeter using a dry wipe as abrasive agent and applying a pressure of 1 kPa. The influence of abrasion on the coating was monitored by water CA measurements after 2, 10, 20 and 50 rub cycles. As shown in Table 2, the CA remains almost constant after 25 abrasion cycles proving that the coating properties are not worsened by the abrasion action. Additionally, it is noted that the coating thickness suffered no significant alteration upon being abraded repeatedly as displayed the cross-section FESEM micrographs (FIG. 7) which confirms the good mechanical abrasion tolerance of the coating S10/Lap 41 wt. %.

**Table 2**

| Water contact angle values before and after mechanical abrasion cycles | | | | |
|---|---|---|---|---|
| Number of abrasion cycles | | | | |
| 0 | 2 | 10 | 20 | 50 |
| 114°± 1° | 112° ± 1° | 108° ± 1° | 109° ± 2° | 107° ± 2° |

The same rub abrasion essays were performed with the film disclosed in Fenero M. et al (2017) consisting of a 7:3 mixture of unmodified laponites and modified laponites with a degree of functionalisation of 60%. As shown by the cross-section FESEM micrographs after 5 abrasion cycles (FIG. 8b) no film could be observed indicating that the film does not have good mechanical resistance.

### Citation List

- Fenero M. et al, "Laponite-Based Surfaces with Holistic Self-Cleaning Functionality by Combining Antistatics and Omniphobicity", ACS Applied Materials & Interfaces 2017, 9, 44, pp. 39078-39085
- Hoorfar, M. et al., "Recent progress in axisymmetric drop shape analysis (ADSA)", Advances in colloid and interface science 2006, 121(1-3), 25-49.
- Van der Pauw L.J., "A method of measuring specific resistivity and Hall effect of discs of arbitrary shape", Philips Res. Rep 1958, 13(1), 1-9.
- Albano C. S., et al., "Bisphosphonate-based surface biofunctionalization improves titanium biocompatibility", Journal of Materials Science: Materials in Medicine 2020, 31(11), 1-13).
- Froimowicz, P., et al., "Surface-functionalized particles: From their design and synthesis to materials science and bio-applications", Current Organic Chemistry 2013, 17(9), 900-912).

## Claims

1. A modified static dissipative material comprising:
a) a static dissipative material having a sheet resistance equal to or lower than 10¹² Ohm/sq as measured by the Van der Pauw method when applied to a substrate, and
b) a plurality of inorganic or organic moieties having at least two or more reactive functional groups, each reactive functional group being independently selected from the group consisting of a silyl group, a phosphonyl group, a biphosphonyl group, thiol, a carboxyl group, and an epoxy group,
wherein the inorganic or organic moieties are chemically bonded to the static dissipative material; and
the modified static dissipative material has a static contact angle of water from 50° to 130° as measured by the Laplace-Young fitting method when applied to a substrate.

2. The modified static dissipative material according to claim 1, wherein the static dissipative material is selected from the group consisting of a clay, a metal oxide, a metal, carbon black, graphite and graphene.

3. The modified static dissipative material according to claim 2, wherein the static dissipative material is a clay.

4. The modified static dissipative material according to claim 3, wherein the clay is a laponite.

5. The modified static dissipative material according to any of the claims 1-4, wherein the weight of the inorganic or organic moieties with respect to the weight of the static dissipative material is at least 5% as measured by thermal gravimetric analysis.

6. The modified static dissipative material according to any of the claims 1-5, wherein the inorganic or organic moieties have one reactive functional group placed at the end of the moiety.

7. The modified static dissipative material according to any of the claims 1-6, wherein each reactive functional group is independently selected from the group consisting of a silyl group of the formula: 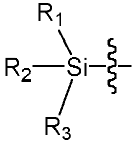
wherein R₁-R₃ are independently selected from the group consisting of halogen, hydroxyl, -(C₁-C₃₀)alkyl, and -O(C₁-C₃₀)alkyl, with the condition that at least one of R₁-R₃ is hydroxyl or -O(C₁-C₃₀)alkyl;
a phosphonyl group of the formula: 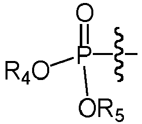
wherein R₄-R₅ are independently selected from the group consisting of hydrogen and -(C₁-C₃₀)alkyl;
a biphosphonyl group of the formula: 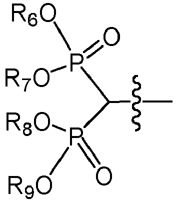
wherein R₆-R₉ are independently selected from the group consisting of hydrogen and -(C₁-C₃₀)alkyl;
a thiol;
a carboxyl group of the formula: 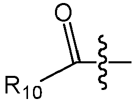
wherein R₁₀ is independently selected from the group consisting of hydrogen, halogen, and -O(C₁-C₃₀)alkyl; and
an epoxy group.

8. The modified static dissipative material according to claim 7, wherein each reactive functional group has the formula: 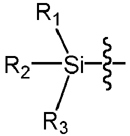 wherein R₁-R₃ are independently selected from the group consisting of halogen, hydroxyl, -(C₁-C₃₀)alkyl, and -O(C₁-C₃₀)alkyl, with the condition that at least one of R₁-R₃ is hydroxyl or -O(C₁-C₃₀)alkyl.

9. The modified static dissipative material according to any of the claims 1-8, wherein the inorganic or organic moieties are fluoropolymer moieties.

10. The modified static dissipative material according to claim 9, wherein the fluoropolymer moieties are perfluoropolyether moieties comprising the repetitive unit of formula: 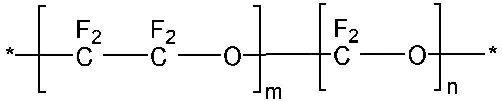 wherein m is from 0 to 500 and n is from 0 to 500, with the condition that when one of m or n is 0, then the other of m or n is other than 0.

11. The modified static dissipative material according to any of the claims 1-10, wherein the inorganic or organic moieties are attached to the static dissipative material through -O-Si-, -O-P-, metal-S- or-O-C- chemical bonds.

12. The modified static dissipative material according to any of the claims 1-11, wherein the weight of the inorganic or organic moieties with respect to the weight of the static dissipative material is from 35 to 50% as measured by thermal gravimetric analysis.

13. A coating composition comprising the modified static dissipative material as defined in any of the claim 1-12, and one or more carriers or additives.

14. A process for the preparation of the modified static dissipative material as defined in any of the claims 1-12, which comprises the following steps:
a) providing a dispersion of the unmodified static dissipative material in a solvent; and
b) adding an inorganic or organic compound having two or more reactive functional groups, each reactive functional group being independently selected from the group consisting of a silyl group, a phosphonyl group, a biphosphonyl group, thiol, a carboxyl group, and an epoxy group to form a chemical bond between the static dissipative material and the inorganic or organic compound.

15. A process for coating a substrate which comprises applying a coating composition as defined in claim 13 to at least part of the surface of a substrate.

16. An article of manufacture coated with the coating composition as defined in claim 13.

## Patentansprüche

1. Ein modifiziertes statisch ableitendes Material, umfassend:
a) ein statisch ableitendes Material mit einem Flächenwiderstand gleich oder kleiner als 10¹² Ohm/sq, gemessen nach der Van der Pauw-Methode, wenn es auf ein Substrat aufgebracht wird, und
b) eine Vielzahl von anorganischen oder organischen Einheiten mit mindestens zwei oder mehr reaktiven funktionellen Gruppen, wobei jede reaktive funktionelle Gruppe unabhängig voneinander ausgewählt ist aus der Gruppe bestehend aus einer Silylgruppe, einer Phosphonylgruppe, einer Biphosphonylgruppe, Thiol, einer Carboxylgruppe, und einer Epoxygruppe,
wobei die anorganischen oder organischen Einheiten chemisch an das statisch ableitende Material gebunden sind; und
das modifizierte statisch ableitende Material einen statischen Kontaktwinkel von Wasser von 50° bis 130°, gemessen durch das Laplace-Young-Ausgleichungsverfahren, hat, wenn es auf ein Substrat aufgebracht wird.

2. Das modifizierte statisch ableitende Material nach Anspruch 1, wobei das statisch ableitende Material ausgewählt ist aus der Gruppe bestehend aus einem Ton, einem Metalloxid, einem Metall, Ruß, Graphit und Graphen.

3. Das modifizierte statisch ableitende Material nach Anspruch 2, wobei das statisch ableitende Material ein Ton ist.

4. Das modifizierte statisch ableitende Material nach Anspruch 3, wobei der Ton ein Laponit ist.

5. Das modifizierte statisch ableitende Material nach einem der Ansprüche 1 bis 4, wobei das Gewicht der anorganischen oder organischen Einheiten in Bezug auf das Gewicht des statisch ableitenden Materials, gemessen durch thermische gravimetrische Analyse, mindestens 5 % beträgt.

6. Das modifizierte statisch ableitende Material nach einem der Ansprüche 1 bis 5, wobei die anorganischen oder organischen Einheiten eine reaktive funktionelle Gruppe haben, die am Ende der Einheit angeordnet ist.

7. Das modifizierte statisch ableitende Material nach einem der Ansprüche 1 bis 6, wobei jede reaktive funktionelle Gruppe unabhängig ausgewählt ist aus der Gruppe bestehend aus einer Silylgruppe der Formel: 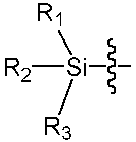
wobei R₁-R₃ unabhängig voneinander ausgewählt sind aus der Gruppe bestehend aus Halogen, Hydroxy, -(C₁-C₃₀)-Alkyl und -O(C₁-C₃₀)-Alkyl, mit der Bedingung, dass mindestens eines von R₁-R₃ Hydroxy oder -O(C₁-C₃₀)-Alkyl ist;
eine Phosphonylgruppe der Formel: 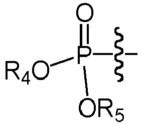
wobei R₄-R₅ unabhängig voneinander ausgewählt sind aus der Gruppe bestehend aus Wasserstoff und -(C₁-C₃₀)Alkyl;
eine Biphosphonylgruppe der Formel: 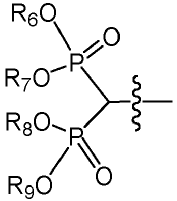
wobei R₆-R₉ unabhängig voneinander ausgewählt sind aus der Gruppe bestehend aus Wasserstoff und -(C₁-C₃₀)Alkyl;
ein Thiol;
eine Carboxylgruppe der Formel: 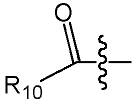
wobei R₁₀ unabhängig ausgewählt ist aus der Gruppe bestehend aus Wasserstoff, Halogen und -O(C₁-C₃₀)-Alkyl; und
eine Epoxygruppe.

8. Das modifizierte statisch ableitende Material nach Anspruch 7, wobei jede reaktive funktionelle Gruppe die folgende Formel hat: 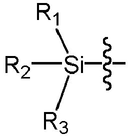 wobei R₁-R₃ unabhängig ausgewählt sind aus der Gruppe bestehend aus Halogen, Hydroxy, -(C₁-C₃₀)-Alkyl und -O(C₁-C₃₀)-Alkyl, mit der Bedingung, dass mindestens eines von R₁-R₃ Hydroxy oder -O(C₁-C₃₀)-Alkyl ist.

9. Das modifizierte statisch ableitende Material nach einem der Ansprüche 1 bis 8, wobei die anorganischen oder organischen Einheiten Fluorpolymereinheiten sind.

10. Das modifizierte statisch ableitende Material nach Anspruch 9, wobei die Fluorpolymereinheiten Perfluorpolyethereinheiten sind, welche die sich wiederholende Einheit der folgenden Formel umfassen: 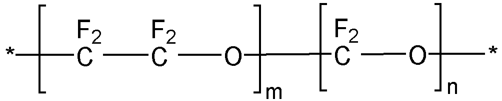 wobei m von 0 bis 500 reicht und n von 0 bis 500 reicht, mit der Bedingung, dass, wenn eines von m oder n = 0 ist, das andere von m oder n verschieden von 0 ist.

11. Das modifizierte statisch ableitende Material nach einem der Ansprüche 1 bis 10, wobei die anorganischen oder organischen Einheiten durch chemische Bindungen von -O-Si-, -O-P-, Metall-S- oder -O-C- an das statisch ableitende Material gebunden sind.

12. Das modifizierte statisch ableitende Material nach einem der Ansprüche 1 bis 11, wobei das Gewicht der anorganischen oder organischen Einheiten in Bezug auf das Gewicht des statisch ableitenden Materials 35 bis 50 % beträgt, gemessen durch thermische gravimetrische Analyse.

13. Eine Beschichtungszusammensetzung umfassend das modifizierte statisch ableitende Material wie in einem der Ansprüche 1 bis 12 definiert, und einen oder mehrere Trägersubstanzen oder Additive.

14. Ein Verfahren zur Herstellung des modifizierten statisch ableitenden Materials wie in einem der Ansprüche 1 bis 12 definiert, welches die folgenden Schritte umfasst:
a) Bereitstellen einer Dispersion des unmodifizierten statisch ableitenden Materials in einem Lösungsmittel; und
b) Hinzufügen einer anorganischen oder organischen Verbindung mit zwei oder mehr reaktiven funktionellen Gruppen, wobei jede reaktive funktionelle Gruppe unabhängig ausgewählt ist aus der Gruppe bestehend aus einer Silylgruppe, einer Phosphonylgruppe, einer Biphosphonylgruppe, Thiol, einer Carboxylgruppe und einer Epoxygruppe, um eine chemische Bindung zwischen dem statisch ableitenden Material und der anorganischen oder organischen Verbindung zu bilden.

15. Ein Verfahren zum Beschichten eines Substrats, welches das Auftragen einer Beschichtungszusammensetzung wie in Anspruch 13 definiert auf mindestens einen Teil der Oberfläche eines Substrats umfasst.

16. Ein Herstellungsgegenstand, der mit der Beschichtungszusammensetzung wie in Anspruch 13 definiert beschichtet ist.

## Revendications

1. Un matériau dissipatif statique modifié comprenant :
a) un matériau dissipatif statique ayant une résistance de couche égale ou inférieure à 10¹² Ohm/sq telle que mesurée par la méthode de Van der Pauw lorsqu'il est appliqué sur un substrat, et
b) une pluralité de fractions inorganiques ou organiques ayant au moins deux groupes fonctionnels réactifs, chaque groupe fonctionnel réactif étant choisi indépendamment dans le groupe constitué par un groupe silyle, un groupe phosphonyle, un groupe biphosphonyle, un thiol, un groupe carboxyle, et un groupe époxy,
dans lequel les fractions inorganiques ou organiques sont liées chimiquement au matériau dissipatif statique ; et
le matériau dissipatif statique modifié a un angle de contact statique de l'eau de 50° à 130° tel que mesuré par la méthode d'ajustement de Laplace-Young lorsqu'il est appliqué à un substrat.

2. Le matériau dissipatif statique modifié selon la revendication 1, dans lequel le matériau dissipatif statique est choisi dans le groupe constitué par une argile, un oxyde métallique, un métal, le noir de carbone, le graphite et le graphène.

3. Le matériau dissipatif statique modifié selon la revendication 2, dans lequel le matériau dissipatif statique est une argile.

4. Le matériau dissipatif statique modifié selon la revendication 3, dans lequel l'argile est une laponite.

5. Le matériau dissipatif statique modifié selon l'une quelconque des revendications 1 à 4, dans lequel le poids des fractions inorganiques ou organiques par rapport au poids du matériau dissipatif statique est d'au moins 5 % tel que mesuré par analyse gravimétrique thermique.

6. Le matériau dissipatif statique modifié selon l'une quelconque des revendications 1 à 5, dans lequel les fractions inorganiques ou organiques ont un groupe fonctionnel réactif placé à l'extrémité de la fraction.

7. Le matériau dissipatif statique modifié selon l'une quelconque des revendications 1 à 6, dans lequel chaque groupe fonctionnel réactif est choisi indépendamment dans le groupe constitué par un groupe silyle de formule : 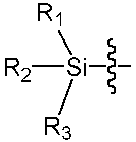
dans lequel R₁-R₃ sont indépendamment choisis dans le groupe constitué par halogène, -hydroxyle, alkyle en C₁-C₃₀ et O(alkyle en -C ₁-C₃₀), à la condition qu'au moins l'un de R₁-R₃ soit hydroxyle -ou O(alkyle en C₁-C₃₀) ;
un groupe phosphonyle de formule : 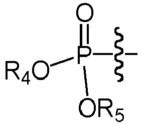
dans laquelle R₄-R₅ sont indépendamment choisis dans le groupe constitué par hydrogène et alkyle en -(C₁-C₃₀) ;
un groupe biphosphonyle de formule : 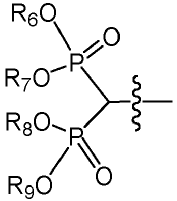
dans laquelle R₆-R₉ sont indépendamment choisis dans le groupe constitué par hydrogène et alkyle en -(C₁-C₃₀) ;
un thiol ;
un groupe carboxyle de formule : 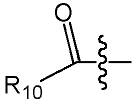
dans laquelle R₁₀ est choisi indépendamment dans le groupe constitué par l'hydrogène, l'halogène et -O(alkyle en C₁-C₃₀) ; et
un groupe époxy.

8. Le matériau dissipatif statique modifié selon la revendication 7, dans lequel chaque groupe fonctionnel réactif a la formule : 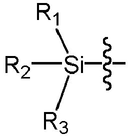 dans laquelle R₁-R₃ sont indépendamment choisis dans le groupe constitué par halogène, -hydroxyle, alkyle en (C₁-C₃₀) et O(alkyle en -C ₁-C₃₀), à la condition qu'au moins l'un de R₁-R₃ soit hydroxyle -ou O(alkyle en C₁-C₃₀).

9. Le matériau dissipatif statique modifié selon l'une quelconque des revendications 1 à 8, dans lequel les fractions inorganiques ou organiques sont des fractions de fluoropolymère.

10. Le matériau dissipatif statique modifié selon la revendication 9, dans lequel les fractions de fluoropolymère sont des fractions de perfluoropolyéther comprenant l'unité répétitive de formule : 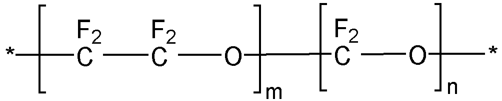 dans laquelle m est de 0 à 500 et n est de 0 à 500, à la condition que lorsque l'un de m ou n est 0, alors l'autre de m ou n est différent de 0.

11. Le matériau dissipatif statique modifié selon l'une quelconque des revendications 1 à 10, dans lequel les fractions inorganiques ou organiques sont attachées au matériau dissipatif statique par des liaisons chimiques -O-Si-, -O-P-, métal-S- ou -O-C-.

12. Le matériau dissipatif statique modifié selon l'une quelconque des revendications 1 à 11, dans lequel le poids des fractions inorganiques ou organiques par rapport au poids du matériau dissipatif statique est de 35 à 50 % tel que mesuré par analyse gravimétrique thermique.

13. Une composition de revêtement comprenant le matériau dissipatif statique modifié tel que défini dans l'une quelconque des revendications 1 à 12, et un ou plusieurs véhicules ou additifs.

14. Un procédé de préparation du matériau dissipatif statique modifié tel que défini dans l'une quelconque des revendications 1 à 12, qui comprend les étapes suivantes :
a) fournir une dispersion du matériau dissipatif statique non modifié dans un solvant ; et
b) ajouter un composé inorganique ou organique ayant deux ou plusieurs groupes fonctionnels réactifs, chaque groupe fonctionnel réactif étant choisi indépendamment dans le groupe constitué par un groupe silyle, un groupe phosphonyle, un groupe biphosphonyle, un thiol, un groupe carboxyle et un groupe époxy pour former une liaison chimique entre le matériau dissipatif statique et le composé inorganique ou organique.

15. Un procédé de revêtement d'un substrat qui comprend l'application d'une composition de revêtement telle que définie dans la revendication 13 sur au moins une partie de la surface d'un substrat.

16. Un article manufacturé revêtu de la composition de revêtement telle que définie dans la revendication 13.
